# EUROPEAN PATENT SPECIFICATION

(11) **EP 4 055 970 B1**
(45) Date of publication and mention of the grant of the patent: **13.11.2024**
(21) Application number: 19951675.8
(22) Date of filing: 07.11.2019
(51) Int. Cl.: H04W 68/04, H04W 72/1273, H04W 72/20, H04W 68/00, H04W 72/04, H04W 88/08

(54) **SYSTEM AND METHOD FOR POWER EFFICIENT ESTABLISHMENT OF UPLINK AND DOWNLINK COMMUNICATIONS IN WIRELESS COMMUNICATION NETWORKS**
SYSTEM UND VERFAHREN ZUR LEISTUNGSEFFIZIENTEN HERSTELLUNG VON UPLINK- UND DOWNLINK-KOMMUNIKATION IN DRAHTLOSEN KOMMUNIKATIONSNETZEN
SYSTÈME ET PROCÉDÉ D'ÉTABLISSEMENT ÉCONOME EN ÉNERGIE DE COMMUNICATIONS EN LIAISON MONTANTE ET DESCENDANTE DANS DES RÉSEAUX DE COMMUNICATION SANS FIL

(43) Date of publication of application: 14.09.2022
(73) Proprietor: ZTE Corporation, Shenzhen, Guangdong 518057 (CN)
(72) Inventor: SHA, Xiubin, Shenzhen, Guangdong 518057 (CN); DAI, Bo, Shenzhen, Guangdong 518057 (CN); MA, Zijiang, Shenzhen, Guangdong 518057 (CN); LU, Ting, Shenzhen, Guangdong 518057 (CN); GAO, Yin, Shenzhen, Guangdong 518057 (CN)
(74) Representative: Vossius & Partner Patentanwälte Rechtsanwälte mbB
(86) International application number: PCT/CN2019/116309
(87) International publication number: WO 2021/087876

(56) References cited:
- WO-A1-2019/098118
- ZTE CORPORATION ET AL: "Other remaining issues of UE grouping for WUS", vol. RAN WG2, no. Chongqing, China; 20191014 - 20191018, 4 October 2019 (2019-10-04), pages 1 - 4, XP051790941, Retrieved from the Internet <URL:http://www.3gpp.org/ftp/tsg_ran/WG2_RL2/TSGR2_107bis/Docs/R2-1912907.zip> [retrieved on 20191004]
- ERICSSON: "Group WUS", vol. RAN WG2, no. Chongqing, China; 20191014 - 20191018, 4 October 2019 (2019-10-04), pages 1 - 9, XP051805240, Retrieved from the Internet <URL:https://ftp.3gpp.org/tsg_ran/WG2_RL2/TSGR2_107bis/Docs/R2-1913776.zip R2-1913776 - Group WUS.docx> [retrieved on 20191004]
- LG ELECTRONICS: "Discussion on UE-grouping wake up signal in MTC", vol. RAN WG1, no. Chongqing, China; 20191014 - 20191020, 5 October 2019 (2019-10-05), pages 1 - 11, XP051789590, Retrieved from the Internet <URL:http://www.3gpp.org/ftp/tsg_ran/WG1_RL1/TSGR1_98b/Docs/R1-1910802.zip> [retrieved on 20191005]
- HUAWEI ET AL: "Discussion on UE paging probability for WUS", vol. CT WG1, no. Reno (NV), USA; 20191111 - 20191115, 4 November 2019 (2019-11-04), pages 1 - 7, XP051812206, Retrieved from the Internet <URL:https://ftp.3gpp.org/tsg_ct/WG1_mm-cc-sm_ex-CN1/TSGC1_121_Reno/Docs/C1-198231.zip C1-198231_Disc_WUS_UE paging probability for WUS.docx> [retrieved on 20191104]
- ERICSSON: "MT early data in Msg4", 3GPP DRAFT; R2-1906929 - MT EARLY DATA IN MSG4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20190513 - 20190517, 3 May 2019 (2019-05-03), Mobile Competence Centre ; 650, route des Lucioles ; F-06921 Sophia-Antipolis Cedex ; France, XP051711228
- ZTE CORPORATION, SANECHIPS: "Remaining issues for D-PUR in IDLE", 3GPP DRAFT; R2-1912896 REMAINING ISSUES FOR D-PUR IN IDLE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 4 October 2019 (2019-10-04), Mobile Competence Centre ; 650, route des Lucioles ; F-06921 Sophia-Antipolis Cedex ; France, XP051790930
- HUAWEI, HISILICON: "Handling of D-PUR configuration for CP solution", 3GPP DRAFT; R2-1912610 HANDLING OF D-PUR CONFIGURATION FOR CP SOLUTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 4 October 2019 (2019-10-04), Mobile Competence Centre ; 650, route des Lucioles ; F-06921 Sophia-Antipolis Cedex ; France, XP051790650
- HUAWEI, HISILICON: "General aspects for D-PUR", 3GPP DRAFT; R2-1906159 GENERAL ASPECTS OF D-PUR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Reno, Nevada, USA; 20190513 - 20190517, 2 May 2019 (2019-05-02), Mobile Competence Centre ; 650, route des Lucioles ; F-06921 Sophia-Antipolis Cedex ; France, XP051710485
- ZTE CORPORATION, SANECHIPS: "Other remaining issues of UE grouping for WUS", 3GPP DRAFT; R2-1912907 OTHER REMAINING ISSUES OF UE GROUPING FOR WUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chongqing, China; 20191014 - 20191018, 4 October 2019 (2019-10-04), Mobile Competence Centre ; 650, route des Lucioles ; F-06921 Sophia-Antipolis Cedex ; France, XP051790941

## Description

### TECHNICAL FIELD

The disclosure relates generally to wireless communications, in particular to a wireless communication method, an apparatus, and a computer program.

### BACKGROUND

Wireless communication networks can include network communication devices, network communication nodes, and at least one core network associated with the wireless network. In some instances, a downlink message from the wireless communication node can be sent to the wireless communication device prior to establishing a connection.

3GPP R2-1912907, 3GPP R2-1913776, 3GPP R1-1910802, and 3GPP C1-198231 form part of the related prior art.

### SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

The example embodiments disclosed herein are directed to solving the issues relating to one or more of the problems presented in the prior art, as well as providing additional features that will become readily apparent by reference to the following detailed description when taken in conjunction with the accompany drawings. In accordance with various embodiments, example systems, methods, devices and computer program products are disclosed herein. It is understood, however, that these embodiments are presented by way of example and are not limiting, and it will be apparent to those of ordinary skill in the art who read the present disclosure that various modifications to the disclosed embodiments can be made while remaining within the scope of this disclosure.

The above and other aspects and their implementations are described in greater detail in the drawings, the descriptions, and the claims.

### BRIEF DESCRIPTION OF THE DRAWINGS

Various example embodiments of the present solution are described in detail below with reference to the following figures or drawings. The drawings are provided for purposes of illustration only and merely depict example embodiments of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

The following examples/aspects/embodiments depicted in figures 3-12, 13A, 13B and 15 and their corresponding description are not according to the claimed invention and are present for illustration purposes only.
Figure 1 illustrates an example cellular communication network in which techniques and other aspects disclosed herein may be implemented, in accordance with an embodiment of the present disclosure.
Figure 2 illustrates block diagrams of an example base station and a user equipment device, in accordance with some embodiments of the present disclosure.
Figure 3 shows a flow diagram for a first example process for determining initiation of MT-EDT in a wireless communication network, in accordance with some embodiments of the present disclosure.
Figure 4 shows a flow diagram for a second example process for determining initiation of MT-EDT in a wireless communication network, in accordance with some embodiments of the present disclosure.
Figure 5 shows a flow diagram for a third example process for determining initiation of MT-EDT in a wireless communication network, in accordance with some embodiments of the present disclosure.
Figure 6 shows a flow diagram of a fourth example process for determining initiation of MT-EDT in a wireless communication network, in accordance with some embodiments of the present disclosure.
Figure 7 shows a flow diagram of a fifth example process for determining initiation of MT-EDT in a wireless communication network, in accordance with some embodiments of the present disclosure.
Figure 8 shows a flow diagram of a first example process for D-PUR failure communication, in accordance with some embodiments of the present disclosure.
Figure 9 shows a flow diagram of a second example process for D-PUR failure communication, in accordance with some embodiments of the present disclosure.
Figure 10 shows a flow diagram of a third example process for D-PUR failure communication, in accordance with some embodiments of the present disclosure.
Figure 11 shows a flow diagram of a first example process for identification strategies for D-PUR in Control Plane CIoT EPS/5GS Optimization solution, in accordance with some embodiments of the present disclosure.
Figure 12 shows a flow diagram of a second example process for identification strategies for D-PUR in Control Plane CIoT EPS/5GS Optimization solution, in accordance with some embodiments of the present disclosure.
Figure 13A shows a flow diagram of a third example process for identification strategies for D-PUR in Control Plane CIoT EPS/5GS Optimization solution, in accordance with some embodiments of the present disclosure.
Figure 13B shows a flow diagram of a fourth example process for D-PUR configuration information exchange, in accordance with some embodiments of the present disclosure.
Figure 14 shows a flow diagram of an example process for delivering or transmitting paging probability of the UE in an inactive state from one base station to another base station, in accordance with some embodiments of the present disclosure.
Figure 15 shows a flow diagram of an example process for delivering or transmitting wake up signal (WUS) Assistance information, in accordance with some embodiments of the present disclosure.

### DETAILED DESCRIPTION OF EXAMPLE EMBODIMENTS

Various example embodiments of the present solutions are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example embodiments and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

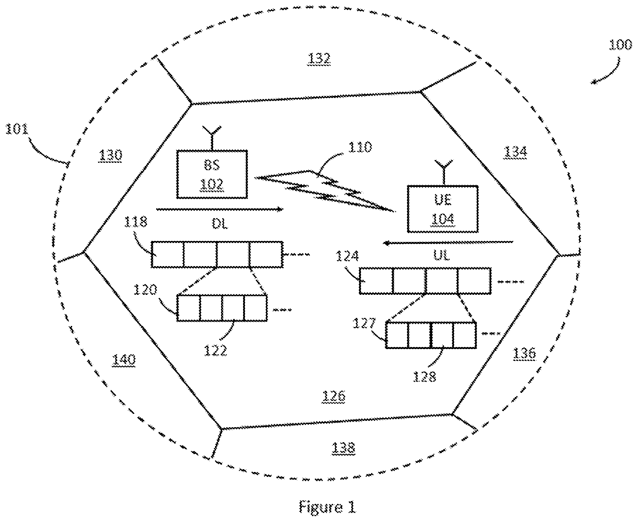

Figure 1 illustrates an example wireless communication network, and/or system, 100 in which techniques disclosed herein may be implemented, in accordance with an embodiment of the present disclosure. In the following discussion, the wireless communication network 100 may be any wireless network, such as a cellular network or a narrowband Internet of things (NB-IoT) network, and is herein referred to as "network 100." Such an example network 100 includes a base station 102 (hereinafter "BS 102") and a user equipment device 104 (hereinafter "UE 104") that can communicate with each other via a communication link 110 (e.g., a wireless communication channel), and a cluster of cells 126, 130, 132, 134, 136, 138 and 140 overlaying a geographical area 101. In Figure 1, the BS 102 and UE 104 are contained within a respective geographic boundary of cell 126. Each of the other cells 130, 132, 134, 136, 138 and 140 may include at least one base station operating at its allocated bandwidth to provide adequate radio coverage to its intended users.

For example, the BS 102 may operate at an allocated channel transmission bandwidth to provide adequate coverage to the UE 104. The BS 102 and the UE 104 may communicate via a downlink radio frame 118, and an uplink radio frame 124 respectively. Each radio frame 118/124 may be further divided into sub-frames 120/127 which may include data symbols 122/128. In the present disclosure, the BS 102 and UE 104 are described herein as non-limiting examples of "communication nodes," generally, which can practice the methods disclosed herein. Such communication nodes may be capable of wireless and/or wired communications, in accordance with various embodiments of the present solution.

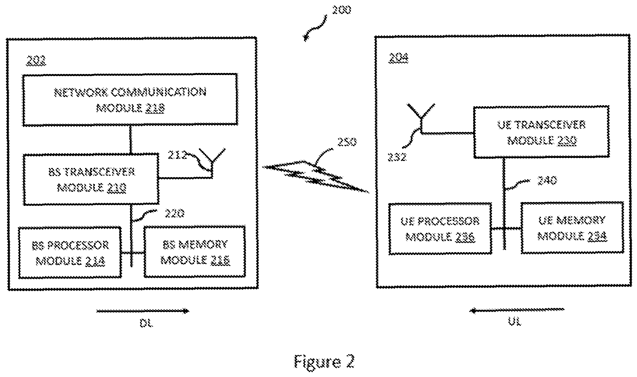

Figure 2 illustrates a block diagram of an example wireless communication system 200 for transmitting and receiving wireless communication signals, e.g., orthogonal frequency-division multiplexing (OFDM)/orthogonal frequency-division multiple access (OFDMA) signals, in accordance with some embodiments of the present solution. The system 200 may include components and elements configured to support known or conventional operating features that need not be described in detail herein. In one illustrative embodiment, system 200 can be used to communicate (e.g., transmit and receive) data symbols in a wireless communication environment such as the wireless communication environment 100 of Figure 1, as described above.

System 200 generally includes a base station 202 (hereinafter "BS 202") and a user equipment device 204 (hereinafter "UE 204"). The BS 202 includes a BS (base station) transceiver module 210, a BS antenna 212, a BS processor module 214, a BS memory module 216, and a network communication module 218, each module being coupled and interconnected with one another as necessary via a data communication bus 220. The UE 204 includes a UE (user equipment) transceiver module 230, a UE antenna 232, a UE memory module 234, and a UE processor module 236, each module being coupled and interconnected with one another as necessary via a data communication bus 240. The BS 202 communicates with the UE 204 via a communication channel 250, which can be any wireless channel or other medium suitable for transmission of data as described herein.

As would be understood by persons of ordinary skill in the art, system 200 may further include any number of modules other than the modules shown in Figure 2. Those skilled in the art will understand that the various illustrative blocks, modules, circuits, and processing logic described in connection with the embodiments disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some embodiments, the UE transceiver 230 may be referred to herein as an "uplink" transceiver 230 that includes a radio frequency (RF) transmitter and a RF receiver each comprising circuitry that is coupled to the antenna 232. A duplex switch (not shown) may alternatively couple the uplink transmitter or receiver to the uplink antenna in time duplex fashion. Similarly, in accordance with some embodiments, the BS transceiver 210 may be referred to herein as a "downlink" transceiver 210 that includes a RF transmitter and a RF receiver each comprising circuity that is coupled to the antenna 212. A downlink duplex switch may alternatively couple the downlink transmitter or receiver to the downlink antenna 212 in time duplex fashion. The operations of the two transceiver modules 210 and 230 can be coordinated in time such that the uplink receiver circuitry is coupled to the uplink antenna 232 for reception of transmissions over the wireless transmission link 250 at the same time that the downlink transmitter is coupled to the downlink antenna 212. In some embodiments, there is close time synchronization with a minimal guard time between changes in duplex direction.

The UE transceiver 230 and the base station transceiver 210 are configured to communicate via the wireless data communication link 250, and cooperate with a suitably configured RF antenna arrangement 212/232 that can support a particular wireless communication protocol and modulation scheme. In some illustrative embodiments, the UE transceiver 210 and the base station transceiver 210 are configured to support industry standards such as the Long Term Evolution (LTE) and emerging 5G standards, and the like. It is understood, however, that the present disclosure is not necessarily limited in application to a particular standard and associated protocols. Rather, the UE transceiver 230 and the base station transceiver 210 may be configured to support alternate, or additional, wireless data communication protocols, including future standards or variations thereof.

In accordance with various embodiments, the BS 202 may be an evolved node B (eNB), a serving eNB, a target eNB, a femto station, or a pico station, for example. In some embodiments, the UE 204 may be embodied in various types of user devices such as a mobile phone, a smart phone, a personal digital assistant (PDA), tablet, laptop computer, wearable computing device, etc. The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the steps of a method or algorithm described in connection with the embodiments disclosed herein may be embodied directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some embodiments, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 generally represents the hardware, software, firmware, processing logic, and/or other components of the base station 202 that enable bidirectional communication between base station transceiver 210 and other network components and communication nodes configured to communication with the base station 202. For example, network communication module 218 may be configured to support internet or WiMAX traffic. In a typical deployment, without limitation, network communication module 218 provides an 802.3 Ethernet interface such that base station transceiver 210 can communicate with a conventional Ethernet based computer network. In this manner, the network communication module 218 may include a physical interface for connection to the computer network (e.g., Mobile Switching Center (MSC)). The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

Having discussed aspects of a networking environment as well as devices that can be used to implement the systems, methods and apparatuses described herein, additional details shall follow.

UEs can consume considerable amount of power when communicating with base stations. In particular, the UEs can consume power when establishing a wireless connection with the base station from an idle state. In some technologies, such as, for example, NarrowBand-Internet of Things (NB-IoT) and enhanced machine-type communication (eMTC), the base station can transmit a small amount of data during a downlink transmission to the UE without having the UE to establish a connection with the base station. For example, the base station can utilize an machine termination-early data transmission (MT-EDT) function to send data to the UE either prior to the UE establishing a radio resource control (RRC) connection or during a signal transmission phase in the RRC connection establishment process. However, the base station may need information regarding the capabilities of the UE prior to initiating MT-EDT. In particular, the base station should have information regarding the maximum data size that the UE can receive based on a category of the UE.

Another approach to conserving the power consumption of UEs is to allow the UE to send uplink data on pre-configured uplink dedicated resource, without having the UE to carry out the physical random access channel (PRACH) process. In some technologies, such as, for example, NB-IoT and eMTC, a dedicated preconfigured uplink resource (D-PUR) function can be utilized in which the base station can pre-configure an uplink dedicated resource, which the UE can use to directly send the uplink data to the base station without having to carry out the PRACH process. However, when the UE's attempt to send data using the D-PUR fails, the base station may not have knowledge of the failure, and therefore may not be able to reconfigure to optimize the D-PUR. Further, there is no effective strategy for identifying and reconfiguring the pre-configured dedicated resource based on a Control Plane CIoT EPS/5GS Optimization solution. Further, in some examples, the UE can communicate with the base station over uplink resources while in an idle state. The uplink resources can be dedicated preconfigured uplink resources (D-PUR) configured by the BS. In some instances, the UE may fail to communicate over the D-PUR. However, as the UE is in the idle state, the BS may have no knowledge of the failure, and therefore may not be able to reconfigure or optimize the D-PUR configuration to reduce the risk of failure. Furthermore, in some instances, a base station may not know the paging probability and/or group WUS capability associated with the UE. Lacking the paging probability and/or group WUS capability of the UE, the BS may not be able to map to WUS group resources which the UE monitors to receive the paging messages.

In some aspects, technical solutions to the technical problems detailed above can include having the core network of the wireless communication system determine whether the UE has the capability to receive data based on MT-EDT process and whether the data is suitable for MT-EDT transmission based on whether a data packet size exceeds the UE capability. The core network can obtain the data packet size in several ways. For example, for User Plane CIoT/5GS Optimization solution, the Access and Mobility Management Function (AMF) can obtain the data packet size form the User Plane Function (UPF) when the data arrives. For Control Plane CIoT/5GS Optimization solution, the AMF can obtain the data packet size when the data arrives. For User Plane CIoT/5GS Optimization solution, the Mobile Management Entity (MME) can obtain the data packet size from the Serving Gateway (S-GW). For Control Plane CIoT/5GS Optimization solution, the MME can obtain the data packet size when the data arrives. The core network can then communicate this information to the base station, which can determine whether or not to carry out the MT-EDT. With regard to the D-PUR failure to communicate, the UE can communicate the failure to the BS over messages during the RRC connection process or in RACH measurement report sent to the BS after establishing a connection. With regard to paging probability and/or group WUS capability of the UE, a target BS can be served with the paging probability and/or group WUS capability of the UE transmitted by another base station that can acquire the paging probability information and/or group WUS capability from a core network. These and other solutions to the problems discussed herein are discussed below.

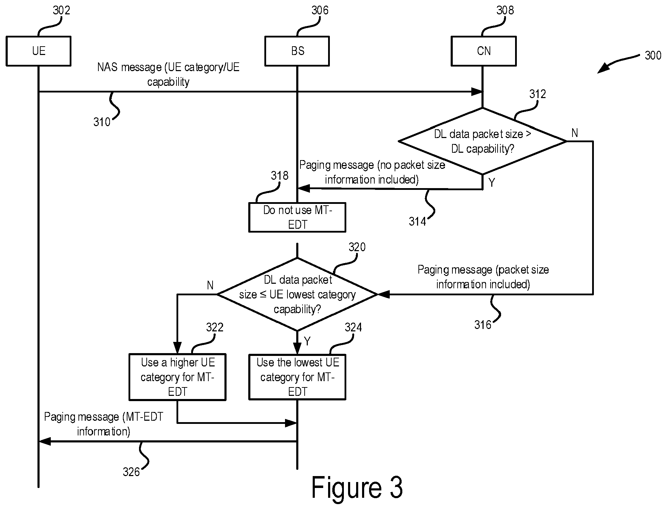

Figure 3 shows a flow diagram for a first example process 300 for determining initiation of MT-EDT in a wireless communication network. In particular, Figure 3 shows communications between a UE 302, a BS (base station) 306, and a core network (CN) 308. The UE and the BS can also be referred to as a wireless communication device and a wireless communication node, respectively. In step 310, the UE can send communication configuration information of the UE to the CN. The communication configuration information can include, for example, UE category and/or UE capability information. In particular, the UE can send a Non-Access Stratum (NAS) message to the CN, where the message includes a UE category and/or UE capability for receiving MT-EDT data. The NAS message, for example, can be an initial attach request or a tracking area update request. The message can include UE category information, which can limit the size of the downlink packet that can be transmitted to the UE by the BS in a transmission time interval (TTI). As an example, the UE categories can include a Category NB1, with an associated maximum TTI data carrying capacity of 680 bits, a Category NB2, with an associated maximum TTI data carrying capacity of 2536 bits, a Category M1, with an associated maximum TTI data carrying capacity of 1000 bits, or a Category M2, with an associated maximum TTI data carrying capacity of 4008 bits.

In some examples, the UE category or downlink capability information can be carried by a UE Capability Container (such as, for example, the UE network capability or MS network feature support). In some examples, the UE category or MT-EDT capability information can be provided in bitmap, where each bit position can correspond to a capability or category, and a value of '0' or '1' corresponding to the bit position can indicate whether the UE has or does not have that particular capability. As mentioned above, the UE category can include at least one of NB-IoT Category 1 (Category NB1), NB-IoT Category 2 (Category NB2), eMTC Category 1 (Category M1), or eMTC Category 2 (Category M2). The UE capability information can include whether the UE supports the MT-EDT process.

In step 312, the CN can determine whether the UE has the capability of receiving MT-EDT data. In particular, the CN can determine whether a downlink packet size associated with the potential MT-EDT data is greater than a downlink transmission capability of the UE. The CN can determine the category of the UE from the UE category information received from the UE and compare the maximum TTI data carrying capacity associated with the UE category with the downlink packet size. For example, the CN can compare whether the downlink data packet size is greater than any one of the following maximum TTI data carrying capacities: 680 bits (for category NB1), 2536 bits (for Category NB2), 1000 bits (for category M1), and 4008 bits (for category M2). If the CN determines that the downlink data packet size is greater than the maximum TTI data carrying capacity of the category associated with the UE, the CN can determine that the UE is not able to carry out the MT-EDT process. In another example, the CN can determine that the UE cannot carry out the MT-EDT process based on a capability information received from the UE. For example, the capability information received from the UE (at step 310) can include whether the UE is able to carry out the MT-EDT process, and the CN can make the determination based on the received information.

In step 314, the CN, upon determining that the UE is not capable of carrying out the MT-EDT process, can send a paging message to the BS that does not include the downlink data packet size information. Not including the downlink data packet size in the paging message can indicate to the BS that the UE is not capable of carrying out the MT-EDT process or that the data size is too large to be transmitted by MT-EDT procedure.

Alternatively, if the CN determines that the UE is capable of carrying out the MT-EDT process, the CN, in step 316 can send a paging message to the BS that includes the downlink data packet size information. As mentioned above, the CN can determine whether the data can be transmitted by the MT-EDT process by comparing the downlink data packet size to the maximum number of downlink data block bits that can be received within a TTI associated with the UE category. If the downlink data packet size is less than or equal to the maximum number of downlink data block bits that can be received within a TTI associated with the category of the UE, then the CN can determine that the data can be transmitted by the MT-EDT process. In some examples, the message received from the UE can indicate that the UE is capable of carrying out the MT-EDT process, and the CN can determine likewise based on that information. Once the CN determines that the UE is capable of carrying out the MT-EDT process, the CN can send a paging message to the BS including the downlink data packet size. Including the downlink data packet size in the paging message to the BS can indicate to the BS that the UE is capable of carrying out the MT-EDT process. In some examples, the communication to the BS can additionally include the UE category and/or the UE capability information for carrying out the MT-EDT process.

At the BS, if the BS receives a paging message that does not include the downlink data packet size, the BS, in step 318, can determine that the UE is not capable of carrying out the MT-EDT process or that the data size is too large to be transmitted by MT-EDT procedure. As a result, the BS will not initiate the MT-EDT process with the UE.

On the other hand, if the BS receives a paging message that includes the downlink data packet size, the BS, can determine that the UE is capable of carrying out the MT-EDT process. At step 320, the BS can determine whether the data packet size is less than or equal to the reception capability of the lowest UE category of all UEs that supports MT-EDT transmission (e.g., with the lowest value of the maximum number of downlink data block bits that can be received within a TTI). If the BS determines that the downlink data packet size is less than or equal to the reception capability of the lowest UE category, then in step 322, the BS determines that the MT-EDT process should continue using the lowest UE capacity. If the BS determines that the downlink data packet size is greater than the reception capability of the lowest UE category, then the BS, in step 324, can select MT-EDT with the higher UE category. The BS can ensure that the selected UE category has a data reception capability that is greater than the downlink data packet size. In step 326, the BS can send a paging message to the UE with MT-EDT information

As an example, if the BS determines that the downlink data packet size is less than or equal to 680 bits, the BS can initiate the MT-EDT process according to Category NB1. The BS, in step 326, for example, can send a U-port paging message to the UE including the MT-EDT information. If the BS determines that the downlink data packet size is greater than 680 bits, there can be an implicit indication that the UE is of the category NB2. The BS can then initiate the MT-EDT process according to the NB2 category, and send a Uu paging message to the UE including the MT-EDT information. If the BS determines that the downlink data packet size is less than or equal to 1000 bits, the BS can initiate the MT-EDT process according the M1 category, and send the U-port paging message to the UE including the MT-EDT information. If the BS determines that the downlink data packet size is greater than 1000 bits, there can be an implicit indication that the UE is of the M2 category. The BS can then initiate the MT-EDT process using the M2 category, and send the U-port paging message to the UE including the MT-EDT information.

The UE can utilize the MT-EDT information received from the BS to receive data over the downlink resource before establishing an RRC connection with the BS. As a result, data can be transmitted to the UE without the UE having to use valuable energy to establish an RRC connection.

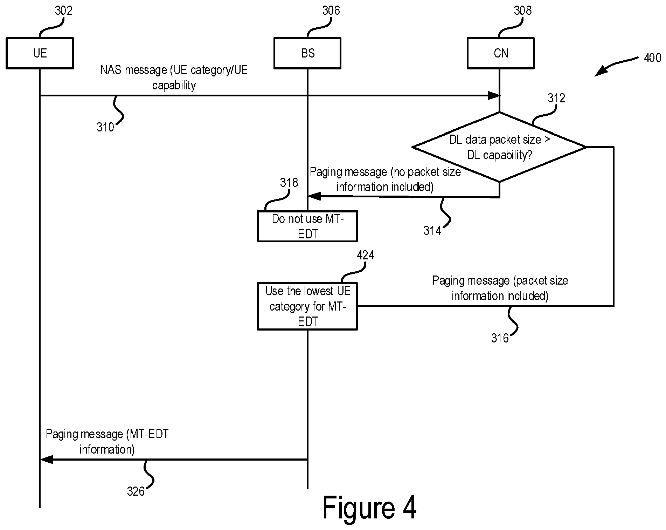

Figure 4 shows a flow diagram for a second example process 400 for determining possible initiation of MT-EDT in a wireless communication network. The second example process flow 400 is similar to the first example process flow 300 discussed above in relation to Figure 3. However, unlike the first example process 300, in which the BS determines the UE category (steps 320, 322, and 324) before paging the UE, in the second example process 400, the BS does not determine the UE category. Instead, the BS sends the paging message (step 326) including the MT-EDT information based on the determination (in step 424) that the UE is capable of carrying out the MT-EDT process. For example, the BS can receive a paging message form the CN including downlink packet size information (in step 316). Based on the presence of the downlink packet size information in the received paging message, the BS can make the determination that the UE can carry out the MT-EDT process. Based on this determination, the BS can directly proceed with sending the UE the paging message (in step 326) including the MT-EDT information.

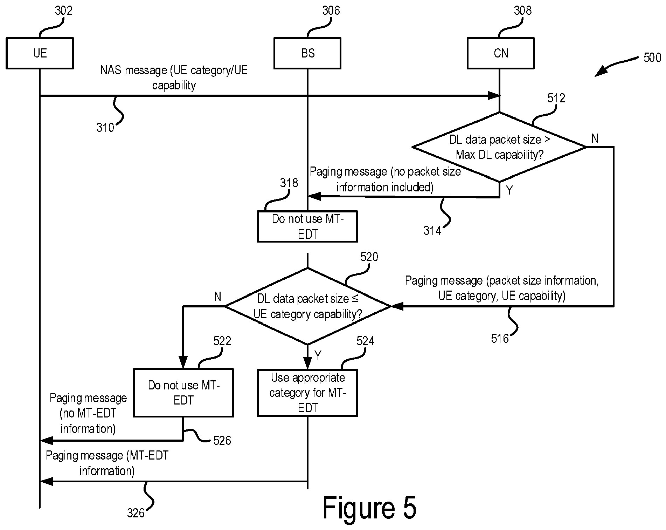

Figure 5 shows a flow diagram for a third example process 500 for determining initiation of MT-EDT in a wireless communication network. In the third example process 500, the CN, in step 512 determines whether the downlink data packet size is greater than the reception capability of the highest UE category of all UEs that supports MT-EDT transmission (e.g., with highest value of the maximum number of downlink data block bits that can be received within a TTI) and whether the UE supports the MT-EDT process. As an example, the CN can determine a broad category of the UE, such as, whether the UE is of the NB-IoT category or of the eMTC category. As discussed above, the NB-IoT includes two separate categories: NB1 and NB2, and similarly, the eMTC category includes two separate categories M1 and M2. The CN can determine whether the downlink data packet size is greater than the reception capability of the highest UE category of each of the NB-IoT and eMTC categories. The highest UE category of the NB-IoT UE is under the NB2 category (2536 bits) and the highest UE category of the eMTC UE is under the M2 category (4008 bits). Thus the CN determines whether the downlink data packet size is greater than either 2536 bits or 4008 bits. If the UE is of the NB-IoT category (NB1 or NB2) and the CN determines that the downlink data packet size is greater than 2536 bits, then the CN refrains from including the downlink data packet size information in the paging message (step 314) to the BS. If the UE is of the eMTC category, and the CN determines that the downlink data packet size is greater than 4008 bits, the CN refrains from (e.g., bypasses or skips) including the downlink data packet size information in the paging message (step 314) to the BS. If however, the CN determines that the downlink data packet size is not greater than either 2536 bits or 4008 bits, the CN can include in the paging message (step 516) to the BS at least one of the downlink data packet size information, the UE category, and the UE capability information.

The BS, will not initiate the MT-EDT process with the UE if the paging message received from the CN does not include the downlink data packet size information (step 318). If the BS receives the paging message with the downlink data packet size information, the presence of the size information can serve as an indication to the BS that the UE is capable of carrying out the MT-EDT process. For an NB1 category UE, NB2 category UE, M1 category UE, and the M2 category UE, if the BS determines that the downlink packet data size is less than or equal to data carrying capacity of 680 bits, 2536 bits, 1000 bits, and 4008 bits, the BS can use the appropriate category for sending the paging message to the UE including the MT-EDT information (steps 520, 524). If the downlink data packet size is greater than the data carrying capacity of the respective UE category, then the BS does not send a paging message to the UE including the MT-EDT information (steps 522 and 526).

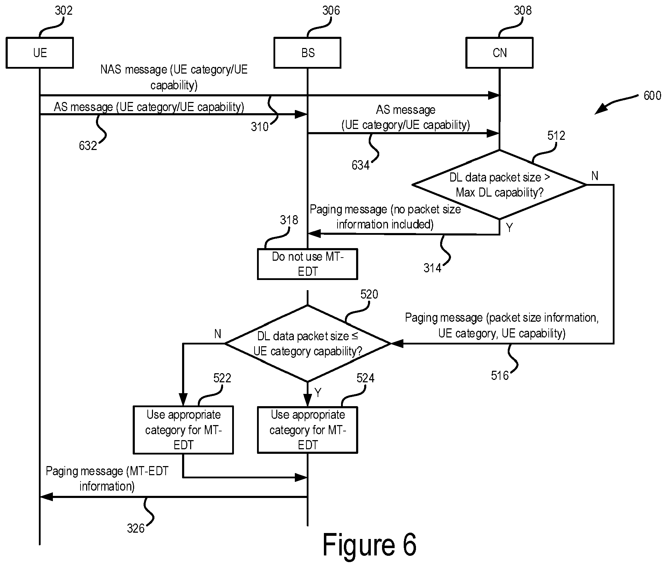

Figure 6 shows a flow diagram of a fourth example process 600 for determining initiation of MT-EDT in a wireless communication network. In the fourth example process 600, the UE can transmit UE category or UE capability information to the BS, which can then relay that information to the CN. For example, in step 632, the UE can transmit an Access Stratum (AS) message including the UE category or UE capability information. In some examples, the AS message can include an uplink RRC message. The message can include parameters such as, for example, UE-RadioPagingInfo cell/element/field carried by UECapabilityInformation. The UE category or UE downlink capability information can be carried by an independent cell/element/field or by a bitmap. The UE category can include at least one of the following: NB-IoT category 1 (category NB1), NB-IoT category 2 (category NB2), eMTC category 1 (category M1), and eMTC category 2 (category M2). The UE downlink capability information can include at least one of the following: a maximum number of downlink data bits that the UE can carry in one TTI, or whether the UE supports the MT-EDT process. In step 634, the BS can transmit the information received from the UE to the CN in an AS message.

In step 512, as discussed above, the CN determines whether the downlink data packet size is greater than a maximum downlink capability of the UE and whether the UE supports the MT-EDT process. Based on the determination, the CN can send a paging message to the BS that includes at least the downlink data packet size information, which serves as in indication to the BS that the UE is capable of carrying out the MT-EDT process. In some examples, the paging message from the CN to the BS can include the UE category or the UE capability information. For example, the paging message can include the "UE Radio Capability for Paging" cell/element. In some examples, the paging message can include a UERadioPagingInformation message, which can further include the UERadioPagingInformation message.

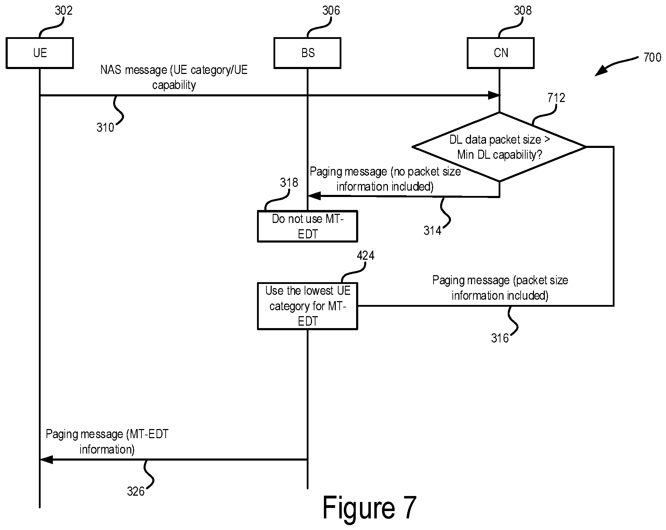

Figure 7 shows a flow diagram of a fifth example process 700 for determining initiation of MT-EDT in a wireless communication network. The process 700 includes step 310 in which the CN receives an NAS message from the UE including the UE capability or UE category information. In step 712 the CN determines whether the downlink data packet size is greater than the reception capability of the lowest UE category of all UEs that supports MT-EDT transmission (e.g., with the lowest maximum number of downlink data block bits that can be received within a TTI). In particular, the CN can determine that for a NB-IoT UE, whether the downlink data packet size is greater than the minimum capability of NB1 category (680 bits) and for a eMTC UE, whether the downlink data packet size is greater than the capability of the M2 category (1000 bits). If the conditions are satisfied, the CN can determine that the UE is not capable of carrying out the MT-EDT process; otherwise, the CN can determine that the UE is not capable of carrying out the MT-EDT process. The remainder of the process is similar to that discussed above in relation to Figure 4.

### Dedicated Preconfigured Uplink Resource

As mentioned above, the UE in idle mode can send uplink data to the BS using preconfigured uplink resource without requiring the PRACH process. However, when the UE's transmission on the uplink resource fails, the BS is unaware of the failure, and therefore, is unable to reconfigure or optimize the D-PUR resource configuration. The discussion herein provides base station strategies directed to D-PUR transmission failures and base station strategies for identifying preconfigured dedicated resources in the Control Plane CIoT EPS/5GS Optimization solution. In addition, the discussion herein provides a method for communicating the UE paging probability and/or group WUS capability to provide support for wakeup service group monitoring to save UE power consumption.

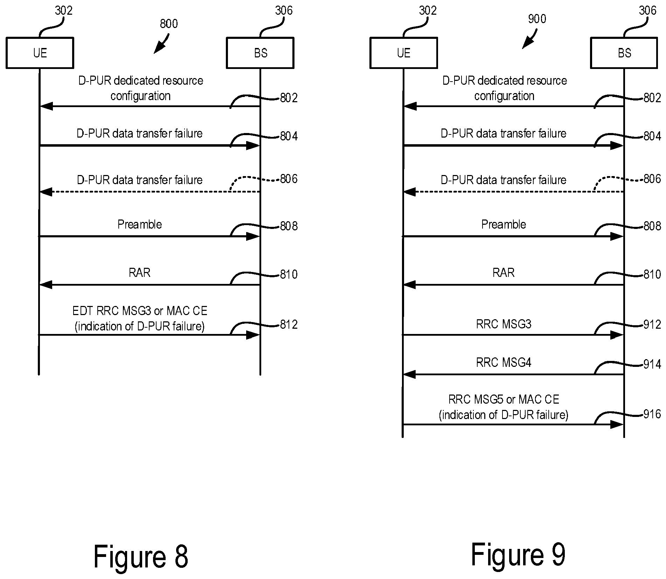

Figure 8 shows a flow diagram of a first example process 800 for D-PUR failure communication. In particular, the first example process 800 includes communications between the UE 302 and the BS 306. In step 802, the UE receives a message from the BS including the D-PUR dedicated resource configuration information. In some examples, the D-PUR dedicated resource configuration information can include at least one of: UL grant information, Carrier frequency or frequency domain information of the D-PUR resources, Period(e.g. time interval) of the D-PUR resources, Taking effect time information of the D-PUR resources, Timer for waiting on D-PUR transmission response, D-PUR Radio-Network Temporary Identifier (RNTI), D-PUR user-specific PDCCH search space (USS) identified by the D-PUR RNTI, maximum D-PUR USS monitoring duration, Time Alignment Timer for idle mode or Serving cell Reference Signal Received Power (RSRP) change threshold used for timing advance (TA) validating decision. The UE can utilize the D-PUR dedicated resource configuration information to communicate data with the base station over an uplink resource without having to establish an RRC connection with the BS. However, in some instances, the uplink communication can fail. For example, in step 804, the UE's attempt to communicate data over the D-PUR fails. In some such instances, it can be beneficial for the BS to have knowledge of the failure so that the BS can implement reconfiguration or optimization of the D-PUR dedicated resource configuration, to reduce the risk of failure for instance. In step 806, the BS does not receive the D-PUR transmission response and D-PUR transmission also fails. The UE, upon failure to transmit on the uplink with D-PUR, can fall back on RRC messaging to transmit a message indicating D-PUR failure to the BS. For example, in step 808, the UE can transmit a Physical Random Access Channel (PRACH) preamble to the BS, which initiates the random access procedure. In response, in step 810, the BS responds with a Random Access Response (RAR) message indicating the reception of the preamble and providing a time-alignment command adjusting the transmission timing of the UE based on the timing of the received preamble. In step 812 the UE can communicate a EDT Message3 to the BS. The EDT Message3 from the UE can include a message indicating that the UE's attempt to communicate over the D-PUR has failed. The BS can receive the EDT Message3 from the UE and can scan the payload of the message to receive the failure message from the UE. Step 812 may also include sending a MAC control element (CE) message. In some examples, the EDT Message3 can include message such as RRCEarlyDataRequest or RRCConnectionRequest.

Figure 9 shows a flow diagram of a second example process 900 for D-PUR failure communication. In particular, Figure 9 includes steps 802-810 that are similar to the corresponding steps discussed above in relation to Figure 8. However in the process 900 shown in Figure 9, the failure message is not sent in the Message3 from the UE, but is instead sent in the RRC Message5 or MAC CE message after the receipt of a message from the BS indicating the establishment of the connection with the BS. For example, in step 910, the UE sends a Message3 in response to the RAR message received from the BS in step 810. In the following step 914, the UE receives the connection establishment message, Message4, from the BS. Subsequently, the UE sends a Message5, which can be an RRC Message5 or a MAC CE message that includes a payload indicating a failure to communicate over the D-PUR. In some examples, the Message5 may include messages such as RRCConnectionSetupComplete or RRCConnectionReestablishmentComplete.

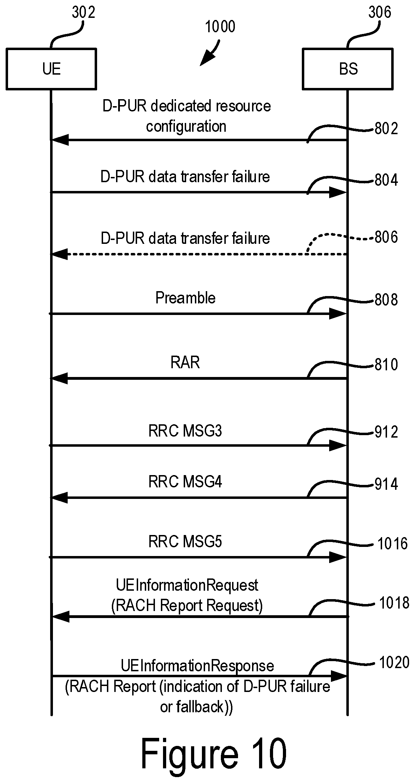

Figure 10 shows a flow diagram of a third example process 1000 for D-PUR failure communication. In particular, in process 1000, a message indicating a failure to communicate over D-PUR is communicated in a RACH measurement report sent by the UE to the BS after the establishment of a connection between the UE and the BS. The process 1000 includes steps 802-810, and 912-914 similar to those discussed above in relation to Figure 9. The process 1000 further includes, in step 1016, an RRC Message5 sent by the UE to the BS as part of the connection establishment process with the BS. In step 1018, the UE receives a message from the BS requesting a RACH report. For example, the UE can receive a UEInformationRequest message from the BS. In response, in step 1020, the UE can transmit a RACH report back to the BS. For example, the UE can transmit a UEInformationResponse message including RACH report to the BS. The report to the BS can include a payload or message that indicates to the BS a failure to communicate over the D-PUR. In some examples, the payload can include an indication of the UE fallback to RRC connection, which in turn can serve as an indication to the BS of the UE's attempt to communicate over D-PUR failed.

### Identification strategies for D-PUR in Control Plane CIoT EPS/5GS Optimization solution

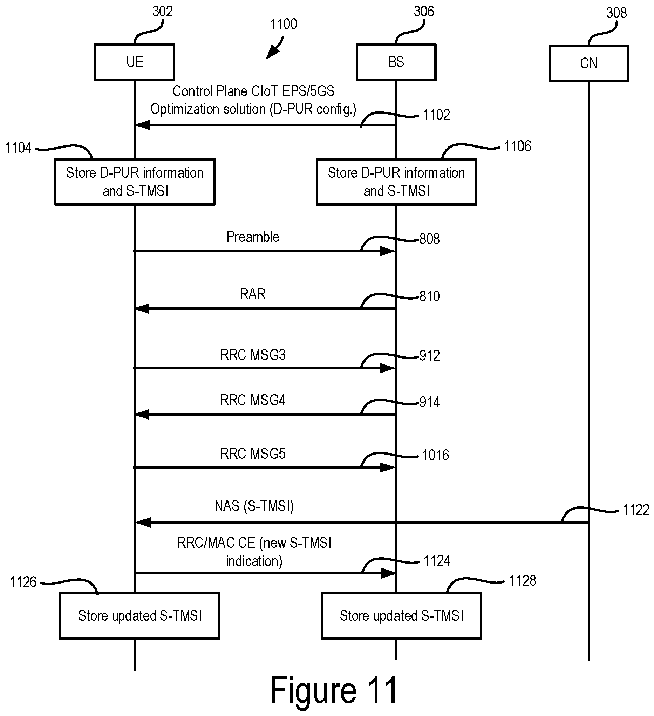

Figure 11 shows a flow diagram of a first example process 1100 for identification strategies for D-PUR in Control Plane CIoT EPS/5GS Optimization solution. In particular, in step 1102, the BS can transmit the D-PUR dedicated resource configuration information to the UE over the Control Plane CIoT EPS/5GS Optimization solution. In steps 1102 and 1104, the UE and the BS, respectively, store the D-PUR configuration information and a temporary subscriber identity of the UE in storage. For example, the temporary subscriber identity of the UE can include a Serving Temporary Mobile Subscriber Identity (S-TMSI). Steps 808, 810, 912, 914, and 1016 can be similar to those discussed above in relation to Figures 8-10. In step 1122, the UE can receive from the CN 308 a NAS message including an update to the temporary subscriber identity (e.g., S-TMSI) of the UE. In response, the UE configured with the D-PUR resource, in step 1124, can notify the BS of the updated temporary subscriber identity. In some examples, the UE can send an AS signaling message to the BS and include the updated temporary subscriber identity in the payload of the AS signaling message. In step 1126, the UE can update the storage at the UE with the updated temporary subscriber identity. Similarly, in step 1128, the BS can also update the storage at the BS with the updated temporary subscriber identity.

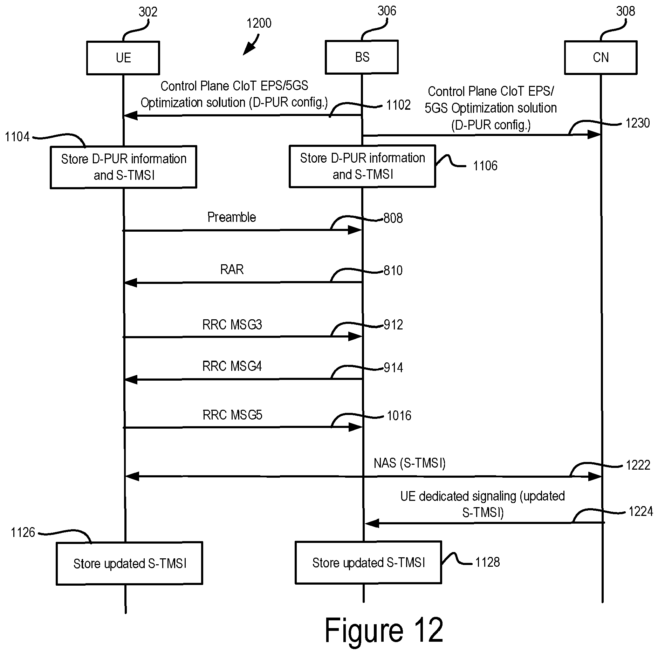

Figure 12 shows a flow diagram of a second example process 1200 for identification strategies for D-PUR in Control Plane CIoT EPS/5GS Optimization solution. In particular, in the second example process 1200, the BS, in step 1230 sends a message to the CN 308 notifying the CN of the D-PUR dedicated resource configuration for the UE of the Control Plane CIoT EPS/5GS Optimization solution. In some examples, the BS can send to the CN the same D-PUR dedicated resource configuration information sent to the UE in step 1102. In contrast with the process 1100 shown in Figure 11, in which the update to the temporary subscriber identity of the UE is sent from the UE to the BS (step 1124), in the process 1200 shown in Figure 12, in step 1224, the update to the temporary subscriber identity of the UE is sent from CN to BS. Subsequent to updating the subscriber identity of the UE, the CN can send to the BS the updated subscriber identity of the UE (step 1224). The BS can then update its storage with the updated subscriber identity of the UE.

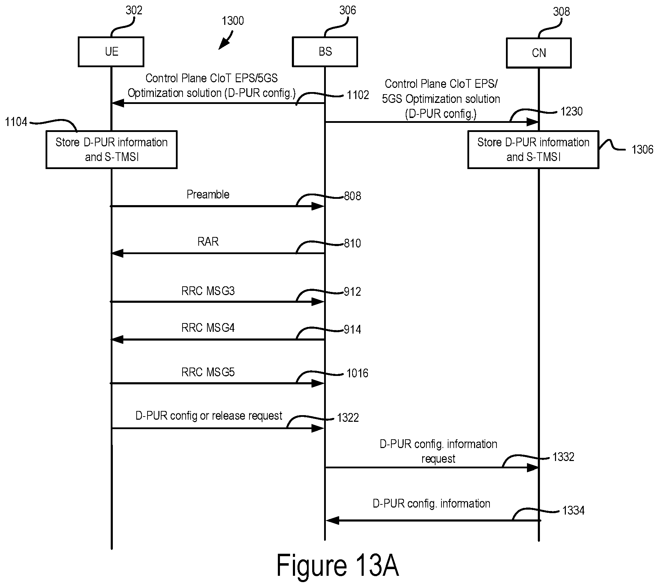

Figure 13A shows a flow diagram of a third example process 1300 for identification strategies for D-PUR in Control Plane CIoT EPS/5GS Optimization solution. In particular, in the third example process 1300, the CN, instead of the BS (as shown in Figures 11 and 12), stores the association between the subscriber identity of the UE and the D-PUR configuration information. For example, in step 1306, the CN can store the D-PUR configuration information received from the BS in association with the current temporary subscriber identity (e.g., S-TMSI) of the UE. For example, in step 1322, the UE can send a message to the BS requesting the D-PUR configuration information or a release trigger resource acquisition, the BS, in response, can send a request message (in step 1332) to the CN for the D-PUR configuration associated with the UE. The request message can include the temporary subscriber identity of the UE. The CN, in response, can retrieve the D-PUR configuration information associated with the UE from storage, and transmit a message to the BS (in step 1334) including the requested D-PUR configuration information.

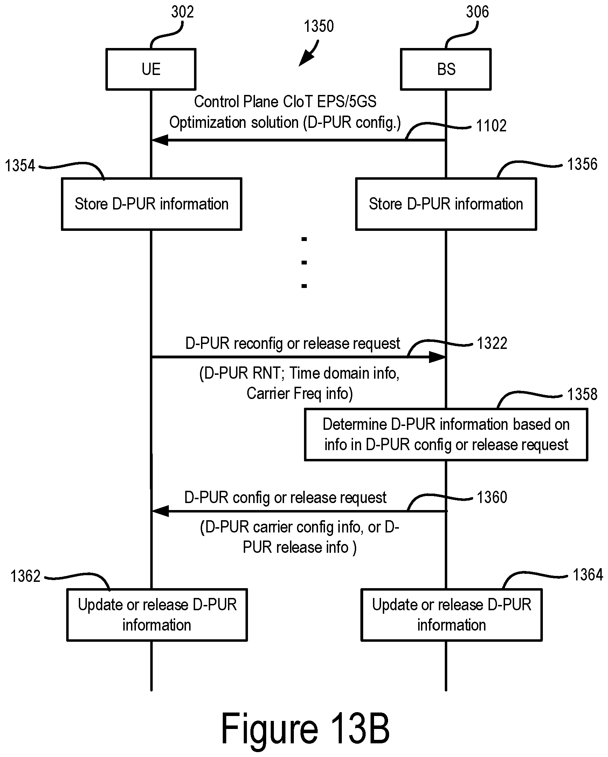

Figure 13B shows a flow diagram of a fourth example process 1350 for D-PUR configuration information reconfiguration or release. In particular, in steps 1354 and 1356, the UE and the BS store the D-PUR configuration information in their respective storage. The UE can then continue to send RRC messages to the BS, such as messages 808, 810, 912, 914, and 1016 discussed above in relation to Figure 13A. The UE, in step 1322 can send a message to the BS requesting D-PUR reconfiguration or release. The message can be a RRC/MAC CE message, and can include a D-PUR RNT, time domain information of the D-PUR resources and optionally carrier frequency or frequency domain information of the D-PUR resource. In response, in step 1358, the BS can determine the stored D-PUR information based on the D-PUR RNT, the time domain information and/or the carrier frequency or frequency domain information of the D-PUR. In step 1360, the BS can send to the UE a RRC/MAC CE message including the determined D-PUR carrier configuration information or D-PUR release information. The UE and the BS can then update (in steps 1362 and 1364) the D-PUR information or release D-PUR information accordingly. Wherein the time domain information of the D-PUR resources includes at least one of: a Taking effect time information of the D-PUR resources in the D-PUR configuration, the time occasion of D-PUR resources deduced from the Taking effect time information of the D-PUR resources in the D-PUR configuration, or Period (e.g., time interval) of the D-PUR resources in the D-PUR configuration.

### Delivery/transmission of Paging Probability and/or group WUS capability of an UE in RRC Inactive state

In example wireless communication networks that support WUS (Wake Up Signal) groups, the BS has to know the paging probability and/or group WUS capability of the UE in order to map out the WUS group resources that the UE needs to monitor. In a conventional paging probability transmission process is the UE and the CN negotiate the paging probability and/or group WUS capability of the UE through NAS. In the paging process, the CN can transmit the paging probability and/or group WUS capability of the UE to a BS by using a paging message. The BS then follows the paging probability and/or group WUS capability of the UE to map the WUS group resources that the UE needs to monitor, and then sends a WUS signal on the WUS resource, thereby waking up the UE to monitor the paging.

However, for a UE in the RRC_Inactive state, as prior to the BS indicating that the UE has entered the RRC_Inactive state, the BS may not have received the paging message from the core network. As a result, the BS would not be able to obtain the paging probability and/or group WUS capability of the UE. Therefore, the BS would be unable to map to the WUS group resources to wake up the UE.

In one approach to addressing the above problem, the UE can communicate the paging probability and/or group WUS capability of the UE with the CN in the inactive state. The CN can communicate the paging probability and/or group WUS capability to a first BS, and the first BS, in turn, can communicate the paging probability and/or group WUS capability to the second BS that would like to send a wake up signal to the UE.

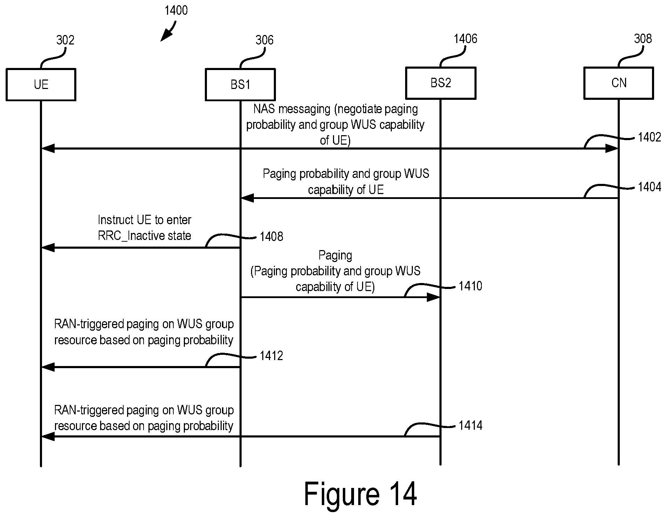

Figure 14 shows a flow diagram of a process 1400, according to the claimed invention, for delivering or transmitting paging probability and/or group WUS capability of the UE in an inactive state from one base station to another. In step 1402, the UE and the CN can negotiate, e.g., over NAS messaging, the paging probability and group WUS capability of the UE. In step 1404, when a UE specific connection is established between the first base station (BS1 306) and the UE, the CN sends the paging probability and the group WUS capability of the UE to the first base station. For example, the CN can send the paging probability and the group WUS capability to the BS1 via the downlink dedicated signaling of the S 1 port (or interface) or the Ng port, which can be used by the BS1 to determine the WUS resources of the UE in RRC_Inactive state. In step 1408, the BS1 can instruct the UE to enter an RRC_Inactive state. Further, the BS1 communicates the paging probability and the group WUS capability of the UE to the second base station (BS2 1410). For example, the BS1, in an RAN-based paging process, can communicate the paging probability and the group WUS capability of the UE to the BS2 through paging messages between the BS1 and BS2.

In step 1412, the BS1 can send RAN-triggered paging messages to the UE. The BS1 also can map the WUS group resource that the UE has to monitor based on the paging probability of the UE. The BS1 then sends out the WUS signal on the WUS resource monitored by the UE, thereby waking up the UE to monitor the paging message. In step 1414, the BS2 carries out the tasks similar to those carried out by the BS1 in step 1412. In this manner, the BS2, which did not initially have the paging probability and/or group WUS capability of the UE can send paging messages to the UE based on the paging probability received from the BS1.

In some embodiments, the paging probability and/or group WUS capability of the UE is carried to the base station through the downlink dedicated signaling of the S1 port of the Ng port when the UE-specific connection is established or updated. The downlink dedicated signaling of the S1 port or the Ng port includes at least one of the following: INITIAL CONTEXT SETUP REQUEST, UE CONTEXT MODIFICATION REQUEST, UE CONTEXT RESUME RESPONSE, HANDOVER COMMAND, HANDOVER REQUEST. In some examples, the paging probability and/or group WUS capability can be expressed in terms of an integer, a percentage, or a probability level.

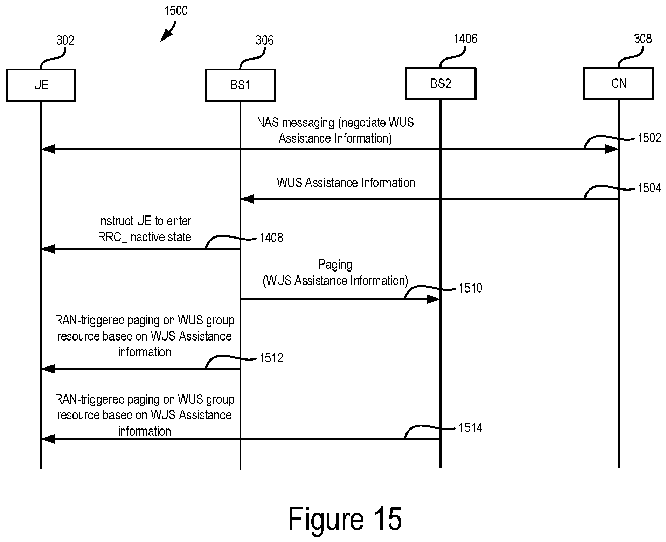

Figure 15 shows a flow diagram of an example process for delivering or transmitting wake up signal (WUS) Assistance information. The process shown in Figure 15 is similar in some respects to the process shown in Figure 14, and like steps are shown with like numerals. In step 1502, the UE and the CN can negotiate, over NAS messages, WUS Assistance information. In step 1504, the BS1 can receive the WUS Assistance information element (IE) from the CN. Presence of the IE can implicitly indicate the UE WUS capability. If the WUS Assistance information IE is present, this indicates that the UE supports UE ID based group WUS. If the paging probability IE is present, this indicates that the UE supports Paging Probability based group WUS. In step 1510, the paging message from BS1 to BS2 can include WUS Assistance information. In step 1512, based on the WUS assistance information, the BS1 can select corresponding WUS group to implement/perform RAN based paging. Similarly, in step 1514, based on the WUS assistance information, the BS2 can select corresponding WUS group to implement/perform RAN based paging.

The table below shows an example WUS Assistance information element:

| **IE/Group Name** | **Presence** | | **Range** | **IE type and reference** |
|---|---|---|---|---|
| ... | | | | |
| WUS Assistance Information | O | | | Refer to table 9.2.3.xxx below |

The above IE shows an example WUS assistance information for a base station to determine the WUS group when paging the UE that is in an RRC_Inactive state. The presence of the above IE can indicate that the UE supports UE-ID based group WUS.

| **9.2.3.xxx** | | | |
|---|---|---|---|
| **IE/Group Name** | **Presence** | **Value** | **Semantics description** |
| Paging Probability | O | INTEGER (0∼100) unit: % | If this IE is present, it implicitly indicates that the UE supports Paging Probability based group WUS, and eNB shall use it to decide the Paging Probability based WUS group when paging the UE |
| | | or | |
| | | ENUMERATED(low Paging Probability, middle Paging Probability, High Paging Probability) | |
| | | or | |
| | | ENUMERATED(Paging Probability Level 1, Paging Probability Level 2, Paging Probability Level 3, ...Paging Probability Level n) | |

In one aspect, the present disclosure describes that a UE transmits the UE category (e.g., indicates the maximum downlink data packet size that can be carried in one TTI) or the UE capability (e.g., whether the UE supports the MT-EDT process) to the core network through NAS signaling, and the core network determines whether the downlink data can be transmitted through the MT-EDT based on the UE capability. In another aspect, a UE transmits the UE category(e.g., indicates the maximum downlink data packet size that can be carried in one TTI) or UE capability (whether the UE supports the MT-EDT process) to the core network through NAS signaling; the core network transmits the UE capability and the downlink data packet size indication to the base station, and the base station, based on the UE capability, determine whether downlink data can be transmitted through MT-EDT. In yet another aspect, a UE transmits the UE category(e.g., indicates the maximum downlink data packet size that can be carried in one TTI) or the UE capability (whether the UE supports the MT-EDT process) to the core network through AS signaling; the core network transmits the UE capability and the downlink data packet size indication to the base station, and the base station, based on the UE capability, determines whether downlink data can be transmitted through MT-EDT.

In one aspect, the present disclosure includes an information reporting strategy when the D-PUR transmission fails. In another aspect, the present disclosure describes D-PUR configuration of the Control Plane CIoT EPS/5GS Optimization solution and the S-TMSI update strategy. In yet another aspect, the present disclosure describes a paging probability transmission strategy of the UE in RRC_INACTIVE state.

While various embodiments of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described illustrative embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according embodiments of the present solution.

Additionally, memory or other storage, as well as communication components, may be employed in embodiments of the present solution. It will be appreciated that, for clarity purposes, the above description has described embodiments of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

## Claims

1. A method, comprising:
receiving (1404), by a wireless communication node (306) from a core network (308), paging probability and a group wake up signal, WUS, support capability associated with a wireless communication device (302); **characterised by**:
transmitting (1410), by the wireless communication node (306) to another wireless communication node (1406), the paging probability and the group WUS support capability;
determining, by the wireless communication node based on the paging probability and the group WUS support capability, WUS group resources; and
transmitting (1412), by the wireless communication node (306) to the wireless communication device (302), a wake-up signal over the WUS resources.

2. The method of claim 1, comprising:
receiving, by the wireless communication node from the core network, the paging probability and the group WUS support capability, via a dedicated signaling of a S1 interface or an Ng interface when a UE-specific connection is established or updated.

3. The method of claim 2, wherein the dedicated signaling includes at least one of: an initial context setup request, a UE context modification request, a UE context resume response, a handover command, or a handover request.

4. The method of claim 1, comprising:
transmitting, by the wireless communication node to the another wireless communication node, the paging probability, and the group WUS support capability.

5. A wireless communications apparatus (306) comprising at least one processor (214) configured to:
receive (1404), via a transceiver (210) from a core network (308), paging probability and a group wake up signal, WUS, support capability associated with a wireless communication Z device (302);
transmit (1410), via the transceiver (210) to another wireless communication node (1406), the paging probability and the group WUS support capability;
determine, based on the paging probability and the group WUS support capability, WUS group resources; and
transmit (1412), via the transceiver (210) to the wireless communication device (302), a wake-up signal over the WUS resources.

6. The wireless communications apparatus of claim 5, wherein the at least one processor is configured to:
receive, via the transceiver from the core network, the paging probability and the group WUS support capability, via a dedicated signaling of a S1 interface or an Ng interface when a UE-specific connection is established or updated.

7. The wireless communications apparatus of claim 6, wherein the dedicated signaling includes at least one of: an initial context setup request, a UE context modification request, a UE context resume response, a handover command, or a handover request.

8. The wireless communications apparatus of claim 5, wherein the at least one processor is configured to:
transmit, via the transceiver to the another wireless communication node, the paging probability, and the group WUS support capability.

9. A computer program product comprising a computer-readable program medium code stored thereupon, the code, when executed by at least one processor (214), causing the at least one processor to:
receive (1404), via a transceiver (210) from a core network (308), paging probability and a group wake up signal, WUS, support capability associated with a wireless communication device (302);
transmit (1410), via the transceiver (210) to another wireless communication node (1406), the paging probability and the group WUS support capability;
determine, based on the paging probability and the group WUS support capability, WUS group resources; and
transmit, via the transceiver (210) to the wireless communication device (302), a wake-up signal over the WUS resources.

10. The computer program product of claim 9, wherein the code, when executed by the at least one processor, causes the at least one processor to:
receive, via the transceiver from the core network, the paging probability and the group WUS support capability, via a dedicated signaling of a S1 interface or an Ng interface when a UE-specific connection is established or updated.

11. The computer program product of claim 10, wherein the dedicated signaling includes at least one of: an initial context setup request, a UE context modification request, a UE context resume response, a handover command, or a handover request.

12. The computer program product of claim 9, wherein the code, when executed by the at least one processor, causes the at least one processor to:
transmit, via the transceiver to the another wireless communication node, the paging probability, and the group WUS support capability.

## Patentansprüche

1. Verfahren, das aufweist:
Empfangen (1404), durch einen drahtlosen Kommunikationsknoten (306) von einem Kernnetzwerk (308), einer Paging-Wahrscheinlichkeit und einer Gruppen-Wecksignal, WUS, Unterstützungsfähigkeit, die mit einem drahtlosen Kommunikationsgerät (302) assoziiert ist;
**gekennzeichnet durch**:
Senden (1410), durch den drahtlosen Kommunikationsknoten (306) an einen anderen drahtlosen Kommunikationsknoten (1406), der Paging-Wahrscheinlichkeit und der Gruppen-WUS-Unterstützungsfähigkeit;
Bestimmen, durch den drahtlosen Kommunikationsknoten basierend auf der Paging-Wahrscheinlichkeit und der Gruppen-WUS-Unterstützungsfähigkeit, von WUS-Gruppenressourcen; und
Senden (1412), durch den drahtlosen Kommunikationsknoten (306) an das drahtlose Kommunikationsgerät (302), eines Wecksignals über die WUS-Ressourcen.

2. Verfahren nach Anspruch 1, das aufweist:
Empfangen, durch den drahtlosen Kommunikationsknoten von dem Kernnetzwerk, der Paging-Wahrscheinlichkeit und der Gruppen-WUS-Unterstützungsfähigkeit über eine dedizierte Signalisierung einer S1-Schnittstelle oder einer Ng-Schnittstelle, wenn eine UE-spezifische Verbindung hergestellt oder aktualisiert wird.

3. Verfahren nach Anspruch 2, wobei die dedizierte Signalisierung mindestens eines aufweist von: einer anfänglichen Kontexteinrichtungs-Anforderung, einer UE-Kontextmodifikations-Anforderung, einer UE-Kontextfortsetzungs-Antwort, einem Übergabebefehl oder einer Übergabeanforderung.

4. Verfahren nach Anspruch 1, das aufweist:
Senden, durch den drahtlosen Kommunikationsknoten an den anderen drahtlosen Kommunikationsknoten, der Paging-Wahrscheinlichkeit und der Gruppen-WUS-Unterstützungsfähigkeit.

5. Drahtlose Kommunikationsvorrichtung (306), die mindestens einen Prozessor (214) aufweist, der konfiguriert ist, um:
über einen Transceiver (210) von einem Kernnetzwerk (308) eine Paging-Wahrscheinlichkeit und eine Gruppen-Wecksignal, WUS, Unterstützungsfähigkeit zu empfangen (1404), die mit einem drahtlosen Kommunikationsgerät (302) assoziiert ist;
über den Transceiver ( 210) an einen anderen drahtlosen Kommunikationsknoten (1406) die Paging-Wahrscheinlichkeit und die Gruppen-WUS-Unterstützungsfähigkeit zu senden (1410);
basierend auf der Paging-Wahrscheinlichkeit und der Gruppen-WUS-Unterstützungsfähigkeit, WUS-Gruppenressourcen zu bestimmen; und
über den Transceiver (210) an das drahtlose Kommunikationsgerät (302) ein Wecksignal über die WUS-Ressourcen zu senden (1412).

6. Drahtlose Kommunikationsvorrichtung nach Anspruch 5, wobei der mindestens eine Prozessor konfiguriert ist, um:
über den Transceiver vom Kernnetzwerk die Paging-Wahrscheinlichkeit und die Gruppen-WUS-Unterstützungsfähigkeit über eine dedizierte Signalisierung einer S1-Schnittstelle oder einer Ng-Schnittstelle zu empfangen, wenn eine UE-spezifische Verbindung hergestellt oder aktualisiert wird.

7. Drahtlose Kommunikationsvorrichtung nach Anspruch 6, wobei die dedizierte Signalisierung mindestens eines aufweist von: einer anfänglichen Kontexteinrichtungs-Anforderung, einer UE-Kontextmodifikations-Anforderung, einer UE-Kontextfortsetzungs-Antwort, einem Übergabebefehl oder einer Übergabeanforderung.

8. Drahtlose Kommunikationsvorrichtung nach Anspruch 5, wobei der mindestens eine Prozessor konfiguriert ist, um:
die Paging-Wahrscheinlichkeit und die Gruppen-WUS-Unterstützungsfähigkeit über den Transceiver an den anderen drahtlosen Kommunikationsknoten zu senden.

9. Computerprogrammprodukt, das einen darauf gespeicherten computerlesbaren Programmmediencode aufweist, wobei der Code, wenn er von mindestens einem Prozessor (214) ausgeführt wird, den mindestens einen Prozessor veranlasst:
über einen Transceiver (210) von einem Kernnetzwerk (308) eine Paging-Wahrscheinlichkeit und eine Gruppen-Wecksignal, WUS, Unterstützungsfähigkeit zu empfangen (1404), die mit einem drahtlosen Kommunikationsgerät (302) assoziiert ist;
über den Transceiver (210) an einen anderen drahtlosen Kommunikationsknoten (1406) die Paging-Wahrscheinlichkeit und die Gruppen-WUS-Unterstützungsfähigkeit zu senden (1410);
basierend auf der Paging-Wahrscheinlichkeit und der Gruppen-WUS-Unterstützungsfähigkeit, WUS-Gruppenressourcen zu bestimmen; und
über den Transceiver (210) an das drahtlose Kommunikationsgerät (302) ein Wecksignal über die WUS-Ressourcen zu senden.

10. Computerprogrammprodukt nach Anspruch 9, wobei der Code, wenn er von dem mindestens einen Prozessor ausgeführt wird, den mindestens einen Prozessor veranlasst: über den Transceiver von dem Kernnetzwerk die Paging-Wahrscheinlichkeit und die Gruppen-WUS-Unterstützungsfähigkeit über eine dedizierte Signalisierung einer S1-Schnittstelle oder einer Ng-Schnittstelle zu empfangen, wenn eine UE-spezifische Verbindung hergestellt oder aktualisiert wird.

11. Computerprogrammprodukt nach Anspruch 10, wobei die dedizierte Signalisierung mindestens eines aufweist von: einer anfänglichen Kontexteinrichtungs-Anforderung, einer UE-Kontextmodifikations-Anforderung, einer UE-Kontextfortsetzungs-Antwort, einem Übergabebefehl oder einer Übergabeanforderung.

12. Computerprogrammprodukt nach Anspruch 9, wobei der Code, wenn er von dem mindestens einen Prozessor ausgeführt wird, den mindestens einen Prozessor veranlasst: die Paging-Wahrscheinlichkeit und die Gruppen-WUS-Unterstützungsfähigkeit über den Transceiver an den anderen drahtlosen Kommunikationsknoten zu senden.

## Revendications

1. Procédé, comprenant :
la réception (1404), par un noeud de communication sans fil (306), d'une probabilité de radiomessagerie en provenance d'un réseau central (308), et d'une capacité de support de signal de réveil, WUS, de groupe, associée à un dispositif de communication sans fil (302) ; **caractérisé par** :
la transmission (1410), par le noeud de communication sans fil (306) à un autre noeud de communication sans fil (1406), de la probabilité de radiomessagerie et de la capacité de support de WUS de groupe ;
la détermination par le noeud de communication sans fil, sur la base de la probabilité de radiomessagerie et de la capacité de support de WUS de groupe, de ressources de WUS de groupe ; et
la transmission (1412), par le noeud de communication sans fil (306) au dispositif de communication sans fil (302), d'un signal de réveil sur les ressources de WUS.

2. Procédé selon la revendication 1, comprenant :
la réception, par le noeud de communication sans fil, de la probabilité de radiomessagerie et de la capacité de support de WUS de groupe, en provenance du réseau central, via une signalisation dédiée d'une interface S1 ou d'une interface Ng si une connexion spécifique à l'UE est établie ou mise à jour.

3. Procédé selon la revendication 2, où la signalisation dédiée comprend au moins l'un des éléments suivants : une demande de configuration de contexte initial, une demande de modification de contexte d'UE, une réponse de reprise de contexte d'UE, une instruction de transfert ou une demande de transfert.

4. Procédé selon la revendication 1, comprenant :
la transmission, par le noeud de communication sans fil à un autre noeud de communication sans fil, de la probabilité de radiomessagerie et de la capacité de support de WUS de groupe.

5. Appareil de communication sans fil (306) comprenant au moins un processeur (214) configuré pour :
recevoir (1404), via un émetteur-récepteur (210) d'un réseau central (308), une probabilité de radiomessagerie et une capacité de support de signal de réveil, WUS, de groupe, associée à un dispositif de communication sans fil (302) ;
transmettre (1410), via l'émetteur-récepteur (210) à un autre noeud de communication sans fil (1406), la probabilité de radiomessagerie et la capacité de support de WUS de groupe ;
déterminer, sur la base de la probabilité de radiomessagerie et de la capacité de support de WUS de groupe, des ressources de WUS de groupe ; et
transmettre (1412) via l'émetteur-récepteur (210) au dispositif de communication sans fil (302), un signal de réveil sur les ressources de WUS.

6. Appareil de communication sans fil selon la revendication 5, où ledit au moins un processeur est configuré pour :
recevoir, via l'émetteur-récepteur du réseau central, la probabilité de radiomessagerie et la capacité de support de WUS de groupe, via une signalisation dédiée d'une interface S1 ou d'une interface Ng si une connexion spécifique à l'UE est établie ou mise à jour.

7. Appareil de communication sans fil selon la revendication 6, où la signalisation dédiée comprend au moins l'un des éléments suivants : une demande de configuration de contexte initial, une demande de modification de contexte d'UE, une réponse de reprise de contexte d'UE, une instruction de transfert ou une demande de transfert.

8. Appareil de communication sans fil selon la revendication 5, où ledit au moins un processeur est configuré pour :
transmettre via l'émetteur-récepteur à un autre noeud de communication sans fil, la probabilité de radiomessagerie et la capacité de support de WUS de groupe.

9. Produit de programme informatique comprenant un code enregistré sur un support de programme lisible par ordinateur, dont l'exécution par au moins un processeur (214) entraîne ledit au moins un processeur à :
recevoir (1404), via un émetteur-récepteur (210) d'un réseau central (308), une probabilité de radiomessagerie et une capacité de support de signal de réveil, WUS, de groupe, associée à un dispositif de communication sans fil (302) ;
transmettre (1410), via l'émetteur-récepteur (210) à un autre noeud de communication sans fil (1406), la probabilité de radiomessagerie et la capacité de support de WUS de groupe ;
déterminer, sur la base de la probabilité de radiomessagerie et de la capacité de support de WUS de groupe, des ressources de WUS de groupe ; et
transmettre, via l'émetteur-récepteur (210) au dispositif de communication sans fil (302), un signal de réveil sur les ressources de WUS.

10. Produit de programme informatique selon la revendication 9, où l'exécution du code par ledit au moins un processeur, entraîne ledit au moins un processeur à :
recevoir, via l'émetteur-récepteur du réseau central, la probabilité de radiomessagerie et la capacité de support de WUS de groupe, via une signalisation dédiée d'une interface S1 ou d'une interface Ng si une connexion spécifique à l'UE est établie ou mise à jour.

11. Produit de programme informatique selon la revendication 10, où la signalisation dédiée comprend au moins l'un des éléments suivants : une demande de configuration de contexte initial, une demande de modification de contexte d'UE, une réponse de reprise de contexte d'UE, une instruction de transfert ou une demande de transfert.

12. Produit de programme informatique selon la revendication 9, où l'exécution du code par ledit au moins un processeur, entraîne ledit au moins un processeur à :
transmettre, via l'émetteur-récepteur à un autre noeud de communication sans fil, la probabilité de radiomessagerie et la capacité de support de WUS de groupe.
